# EUROPEAN PATENT APPLICATION

(11) **EP 3 290 546 A1**
(43) Date of publication of application: **07.03.2018**
(21) Application number: 17176395.6
(22) Date of filing: 16.06.2017
(51) Int. Cl.: C25B 15/04, C02F 1/461, C25B 13/00, C25B 9/10, C25B 9/08, C25B 9/12

(54) **IONISED WATER GENERATOR BY ELECTROLYSIS**

(30) Priority: 31.08.2016 TW 16213352 U
(71) Applicant: NANOPLUS LTD., Grand Cayman, KY1-1208 (KY)
(72) Inventor: Lu, Hung-Tu, 115 Taipei City (TW); Lo, Cheng-Wen, 807 Kaohsiung City (TW); Si, Tak-Ngai Samuel, Shatin, NT (HK); Tai, Ming-Yan, Kowloon (HK)
(74) Representative: Michalski Hüttermann & Partner Patentanwälte mbB

(57) **Abstract**

An electrolysis nano ion water generator (100) includes a cathode electrolytic tank (110), an anode electrolytic tank (120), an ion exchange membrane (130), and two electrolytic plates. During the electrolysis process, gases are generated and stay between the cathode electrolytic plate (111) and the anode electrolytic plate (121). By adjusting the distance between the cathode electrolytic plate (111) and the anode electrolytic plate (121), the gases can be removed from the area.

## Description

### BACKGROUND OF THE INVENTION

### 1. Field of the Invention

The present invention relates to a generator. More particularly, the present invention relates to an electrolysis nano ion water generator, which generates electrolysis nano ion water by a method of electrolysis.

### 2. Description of the Related Art

The conventional electrolysis ion water is able to provide clean water, which is clean enough to serve as drinking water, and causes no pollution to the environment.

However, during the process of generating electrolysis ion water, oxygen is generated on the anode side and the oxygen bubbles are formed in the aqueous electrolyte solution. These bubbles obstruct the electrolysis and reduce the efficiency of electrolysis. Similarly, the hydrogen generated on the cathode side also obstructs the electrolysis process.

Therefore, the conventional electrolysis ion water generator can be improved further.

### SUMMARY OF THE INVENTION

The purpose of the present invention is to provide an electrolysis nano ion water generator to deal with the aforementioned technical issue.

Provided herein is an electrolysis nano ion water generator, including a cathode electrolytic tank, an anode electrolytic tank, an ion exchange membrane, a DC power supply module, and a regulation module. The cathode electrolytic tank stores pre-electrolyzed water and has a cathode electrolytic plate, which is disposed near to the inner side of the cathode electrolytic tank. The anode electrolytic tank stores aqueous electrolyte solution and has an anode electrolytic plate, which is disposed near to the inner side of the anode electrolytic tank. The ion exchange membrane is located between the cathode electrolytic tank and the anode electrolytic tank. A negative electrode of the DC power supply module is coupled to the cathode electrolytic plate and a positive electrode is coupled to the anode electrolytic plate. The DC power supply module provides direct current between the cathode electrolytic plate and the anode electrolytic plate to electrolyze the pre-electrolyzed water and the aqueous electrolyte solution. Cations generated in the anode electrolytic tank permeate through the ion exchange membrane and enter the cathode electrolytic tank, such that electrolysis nano ion water is produced. The regulation module includes two slide rails, which are respectively disposed on two edges of the electrolysis nano ion water generator. Each slide rail includes a gripper that holds an edge of the cathode electrolytic plate and another gripper that holds an edge of the anode electrolytic plate. Each gripper slides along its corresponding slide rail.

Preferably, the electrolysis nano ion water generator may further include a flow control device coupled to a cathode electrolytic tank inlet and a cathode electrolytic tank outlet of the cathode electrolytic tank and an anode electrolytic tank inlet and an anode electrolytic tank outlet of the anode electrolytic tank.

Preferably, the cathode electrolytic tank may include a pH meter module to measure the pH value of the produced electrolysis nano ion water.

Preferably, the anode electrolytic tank may include a concentration measurement module to measure the concentration of the aqueous electrolyte solution.

Preferably, the DC power supply module may include a current detection unit to measure the current supplied by the DC power supply module.

In one aspect, different gases are generated during the electrolysis process and when these gases stay between the cathode electrolytic plate and the anode electrolytic plate, the electrolysis process may become less effective. By adjusting the distance between the cathode electrolytic plate and the anode electrolytic plate, the gases can be removed from the area. The safety ventilation device may additionally be included to effectively and safely exhaust these harmful and flammable and explosive gases during the process. In another aspect, the flow control device may additionally be included outside the cathode electrolytic tank and the anode electrolytic tank to control the inflow and outflow of the water and the solution and therefore to control their concentration. In combination of these two approaches, the electrolysis nano ion water with different pH values and different ion concentrations may be produced.

### BRIEF DESCRIPTION OF THE DRAWINGS

FIG. 1 is a schematic diagram showing an electrolysis nano ion water generator of the present invention.
FIG. 2 is a flow chart showing an application of an electrolysis nano ion water generator of the present invention.

### DESCRIPTION OF THE PREFERRED EMBODIMENTS

The technical features, content, advantages and effects of the present invention will be presented hereinafter through embodiments accompanied with corresponding figures. The figures are only for the purpose of illustration and example, and do not necessarily imply the actual dimensions or precise configuration of the possible implementations of the present invention. Therefore, the present invention should not be limited by the dimensions or configuration shown in the figures.

The advantages, features, and approaches of the present invention will be described in detail with embodiments and their corresponding figures. The present invention can also be approached in different ways and should not be considered to be limited by these embodiments. For those skilled in the art, the scope of the present invention can be more clearly, thoroughly, and completely understood through these embodiments; however, the present invention is limited solely by the scope of the appended claims.

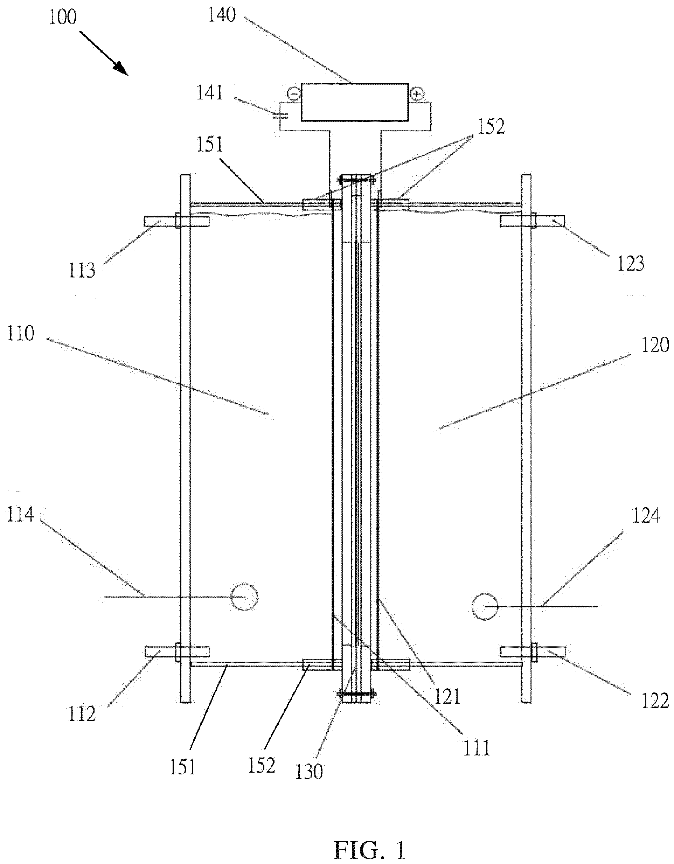

The following refers to FIG. 1, which is a schematic diagram showing an electrolysis nano ion water generator of the present invention. As show in the figure, the electrolysis nano ion water generator 100 of the present invention includes a cathode electrolytic tank 110, an anode electrolytic tank 120, an ion exchange membrane 130, a DC power supply module 140, and a regulation module.

The cathode electrolytic tank 110 is for storing pre-electrolyzed water, such as, but not limited to, purified water, deionized water, or nano ion water. A cathode electrolytic plate 111 is disposed inside the electrolytic tank 110 and close to the ion exchange membrane 130.

The electrolytic tank is for storing aqueous electrolyte solution, such as, but not limited to, aqueous potassium carbonate solution or aqueous sodium carbonate solution. An anode electrolytic plate 121 is disposed inside the anode electrolytic tank 120 and close to the ion exchange membrane 130.

The ion exchange membrane 130 is located between the cathode electrolytic tank 110 and the anode electrolytic tank 120 and separates the pre-electrolyzed water from the aqueous electrolyte solution.

The DC power supply module 140 provides DC power and includes a negative electrode and a positive electrode, wherein the negative electrode is connected to the cathode electrolytic plate 111, and the positive electrode is connected to the anode electrolytic plate 121. When the DC power supply module 140 is providing power, the cathode electrolytic plate 111 electrolyzes the pre-electrolyzed water in the cathode electrolytic tank 110 and the anode electrolytic plate 121 electrolyzes the aqueous electrolyte solution in the anode electrolytic tank 120. Cations generated in the anode electrolytic tank 120 permeate through the ion exchange membrane 130 and enter the cathode electrolytic tank 110 to form nano ion water.

The regulation module includes two slide rails 151 disposed respectively on two edges of the electrolysis nano ion water generator 100. One slide rail 151 is located near the top edge of the cathode electrolytic tank 110 and the anode electrolytic tank 120, and the other slide rail 151 is located near the bottom edge of the cathode electrolytic tank 110 and the anode electrolytic tank 120. On each of the slide rails 151, there are two grippers, wherein one gripper 152 holds the cathode electrolytic plate 111 and the other gripper 152 holds the anode electrolytic plate 121. Each gripper 152 may slide along its corresponding slide rail 151. In other words, two edges of the cathode electrolytic plate 111 and two edges of the anode electrolytic plate 121 are held by the grippers 152, and when the grippers 152 are moved along the slide rails 151, the cathode electrolytic plate 111 or the anode electrolytic plate 121 are moved relatively to the ion exchange membrane 130. By this means, the distance between the cathode electrolytic plate 111 and the ion exchange membrane 130 or the distance between the anode electrolytic plate 121 and the ion exchange membrane 130 may be adjusted.

More specifically, two sides of the ion exchange membrane 130 are confined by the cathode electrolytic tank 110 and the anode electrolytic tank 120. The cathode electrolytic plate 111 faces the negative side of the ion exchange membrane 130 and the anode electrolytic plate 121 faces the positive side of the ion exchange membrane 130. While electrolysis is being performed, both tanks generate their specific ions, which are then exchanged through the ion exchange membrane 130.

The electrolysis nano ion water generator 100 may also include a flow control device (not shown in the figure), which is connected to a cathode electrolytic tank inlet 112 and a cathode electrolytic tank outlet 113 of the cathode electrolytic tank 110. The flow control device is also connected to an anode electrolytic tank inlet 122 and an anode electrolytic tank outlet 123 of the anode electrolytic tank 120. The flow control device controls the flow of the pre-electrolyzed water entering the cathode electrolytic tank 110 through the cathode electrolytic tank inlet 112, the flow of electrolysis nano ion water drawn from the cathode electrolytic tank 110 through the cathode electrolytic tank outlet 113, and the flow of the aqueous electrolyte solution entering the anode electrolytic tank 120 through the anode electrolytic tank inlet 122. The flow control device continuously checks the inflow and outflow of the cathode electrolytic tank 110 and the anode electrolytic tank 120.

The cathode electrolytic tank 110 may include a pH meter module 114, which is used to measure the pH value of the produced electrolysis nano ion water. The anode electrolytic tank 120 may include a concentration measurement module 124 to measure the concentration of the aqueous electrolyte solution. When the concentration is low, the flow control device controls the supply of aqueous electrolyte solution from an aqueous electrolyte solution reservoir to the electrolytic tank 120 in order to adjust the concentration of the aqueous electrolyte solution, such that the concentration of the aqueous electrolyte solution in the anode electrolytic tank 120 is stably maintained. After the flow control device and the concentration measurement module 124 both confirm that the electrolysis nano ion water generator 100 is in the appropriate condition, the DC power supply module provides direct current to the cathode electrolytic plate 111 and the anode electrolytic plate 121.

In addition, the DC power supply module 140 may include a current detection unit 141 to verify the current supplied. Also, a safety ventilation device may be used to remove gas generated during the electrolytic process. The produced electrolysis nano ion water is taken out through the cathode electrolytic tank outlet 113 and poured into a non-metallic container, which is then sealed for storage.

The electrolysis nano ion water generator 100 may, for example, but not limited thereto, be used as one in a series of electrolysis steps, in which the electrolysis nano ion water that is drawn from the cathode electrolytic tank 110 and supplied to another cathode electrolytic tank through a control module for further electrolysis or ionization.

Although the concept of the production method has already been mentioned in the previous description of the electrolysis nano ion water generator, the flow chart of the method is also illustrated here for the purpose of clarification.

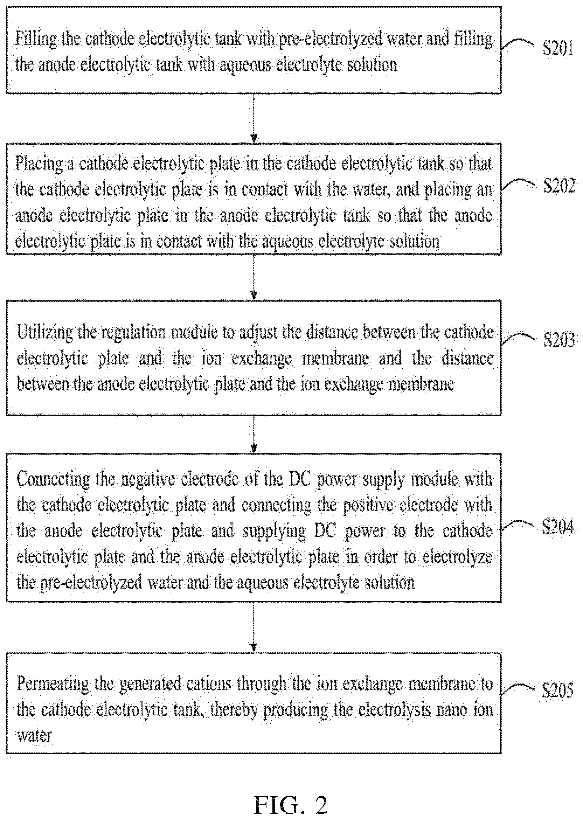

The following refers to FIG. 2, which is a flow chart showing an application of an electrolysis nano ion water generator of the present invention. As shown in the figure, the production method of the electrolysis nano ion water generator of the present invention includes the following steps:

A step S201 is about filling the cathode electrolytic tank with pre-electrolyzed water and filling the anode electrolytic tank with aqueous electrolyte solution.

A step S202 is about placing a cathode electrolytic plate in the cathode electrolytic tank so that the cathode electrolytic plate is in contact with the water, and placing an anode electrolytic plate in the anode electrolytic tank so that the anode electrolytic plate is in contact with the aqueous electrolyte solution.

A step S203 is about utilizing the regulation module to adjust the distance between the cathode electrolytic plate and the ion exchange membrane and the distance between the anode electrolytic plate and the ion exchange membrane.

A step S204 is about connecting the negative electrode of the DC power supply module with the cathode electrolytic plate and connecting the positive electrode with the anode electrolytic plate and supplying DC power to the cathode electrolytic plate and the anode electrolytic plate in order to electrolyze the pre-electrolyzed water and the aqueous electrolyte solution.

A step S205 is about permeating the generated cations through the ion exchange membrane to the cathode electrolytic tank, thereby producing the electrolysis nano ion water.

The flow control device of the electrolysis nano ion water generator may be coupled to the cathode electrolytic tank inlet and the cathode electrolytic tank outlet of the cathode electrolytic tank and the anode electrolytic tank inlet and the anode electrolytic tank outlet of the anode electrolytic tank to control the flows of the pre-electrolyzed water, the aqueous electrolyte solution, and the electrolysis nano ion water.

The pH value of the electrolysis nano ion water in the cathode electrolytic tank of the electrolysis nano ion water generator may be measured by the pH meter module, the concentration of the aqueous electrolyte solution in the anode electrolytic tank may be measured by the concentration measurement module, and the current supplied by the DC power supply module may be verified by the current detection unit, which may also be included in the DC power supply module.

In one aspect, different gases are generated during the electrolysis process and when these gases stay between the cathode electrolytic plate and the anode electrolytic plate, the electrolysis process may become less effective. By adjusting the distance between the cathode electrolytic plate and the anode electrolytic plate, the gases can be removed from the area. The safety ventilation device may additionally be included to effectively and safely exhaust these harmful and flammable and explosive gases during the process. In another aspect, the flow control device may additionally be included outside the cathode electrolytic tank and the anode electrolytic tank to control the inflow and outflow of the water and the solution and therefore to control their concentration. In combination of these two approaches, the electrolysis nano ion water with different pH values and different ion concentrations may be produced.

The purpose of the described embodiments is to illustrate the technical ideas and features of the present invention, such that one skilled in the art can comprehend the contents of the present invention and practice said invention accordingly. It should be understood, however, that the invention is not to be limited to the particular form disclosed; rather, the invention is to cover all modifications, equivalents, and alternatives falling within the spirit and scope of the appended claims.

## Claims

1. An electrolysis nano ion water generator (100), comprising:
a cathode electrolytic tank (110) storing pre-electrolyzed water, wherein the cathode electrolytic tank (110) comprises a cathode electrolytic plate (111), which is disposed near to an inner side of the cathode electrolytic tank (110);
an anode electrolytic tank (120) storing an aqueous electrolyte solution, wherein the anode electrolytic tank (120) comprises an anode electrolytic plate (121), which is disposed near to an inner side of the anode electrolytic tank (120);
an ion exchange membrane (130) disposed between the cathode electrolytic tank (110) and the anode electrolytic tank (120);
a DC power supply module (140) comprising a negative electrode coupled to the cathode electrolytic plate (111) and a positive electrode coupled to the anode electrolytic plate (121), wherein the DC power supply module (140) supplies a direct current between the cathode electrolytic plate (111) and the anode electrolytic plate (121) to electrolyze the pre-electrolyzed water and the aqueous electrolyte solution, and cations generated in the anode electrolytic tank (120) permeate through the ion exchange membrane (130) to produce electrolysis nano ion water; and
a regulation module comprising two slide rails (151) respectively disposed on two edges of the electrolysis nano ion water generator (100), wherein each slide rail (151) comprises a gripper (152) that holds an edge of the cathode electrolytic plate (111) and another gripper (152) that holds an edge of the anode electrolytic plate (121), and each gripper (152) slides along the corresponding slide rail (151).

2. The electrolysis nano ion water generator (100) of claim 1, further comprising a flow control device coupled to a cathode electrolytic tank inlet (112) and a cathode electrolytic tank outlet (113) of the cathode electrolytic tank (110) and coupled to an anode electrolytic tank inlet (122) and an anode electrolytic tank outlet (123) of the anode electrolytic tank (120).

3. The electrolysis nano ion water generator (100) of claim 1 or claim 2, wherein the cathode electrolytic tank (110) comprises a pH meter module (114) for measuring a pH value of the electrolysis nano ion water.

4. The electrolysis nano ion water generator (100) of any one of the preceding claims, wherein the anode electrolytic tank (120) comprises a concentration measurement module (124) for measuring a concentration of the aqueous electrolyte solution.

5. The electrolysis nano ion water generator (100) of any one of the preceding claims, wherein the DC power supply module (140) comprises a current detection unit (141) for measuring a current value supplied by the DC power supply module (140).
